# FASCICULE DE BREVET EUROPEEN

(11) **EP 2 501 996 B1**
(45) Date de publication et mention de la délivrance du brevet: **14.11.2018**
(21) Numéro de dépôt: 10776724.6
(22) Date de dépôt: 15.11.2010
(51) Int. Cl.: F23R 3/06, F23R 3/60, F02C 7/264

(54) **CHAMBRE DE COMBUSTION AVEC BOUGIE D'ALLUMAGE VENTILÉE**
BRENNKAMMER MIT VENTILIERTER ZÜNDKERZE
COMBUSTION CHAMBER HAVING A VENTILATED SPARK PLUG

(30) Priorité: 17.11.2009 FR 0958121
(43) Date de publication de la demande: 26.09.2012
(73) Titulaire: Safran Aircraft Engines, 75015 Paris (FR)
(72) Inventeur: BUNEL, Jacques, Marcel, Arthur, F-94320 Thiais (FR); DE SOUSA, Mario, César, F-77240 Cesson (FR); SEVI, Guillaume, F-94200 Ivry Sur Seine (FR)
(74) Mandataire: Gevers & Orès
(86) Numéro de dépôt international: PCT/EP2010/067458
(87) Numéro de publication internationale: WO 2011/061143

(56) Documents cités:
- EP-A1- 1 770 332
- EP-A2- 1 741 982
- FR-A1- 2 244 083
- FR-A1- 2 926 329

## Description

La présente invention concerne le domaine des moteurs à turbine à gaz et des turboréacteurs et porte plus particulièrement sur l'agencement d'une bougie d'allumage dans la chambre de combustion de ce type de moteur.

Dans un moteur à turbine à gaz, la chambre de combustion reçoit l'air du compresseur dont une partie est mélangée au carburant et est brûlée dans la zone de combustion primaire. L'allumage est assuré par une ou deux bougies disposées en aval du système de carburation. une autre partie de l'air contourne la zone de combustion primaire et vient se mélanger aux gaz de combustion primaire. L'ensemble des gaz chauds est dirigé vers la turbine. Les chambres de combustion sont étudiées pour répondre à un certain nombre de spécifications impératives telles que le rallumage en vol, la forme du profil de température, les émissions de gaz polluants ainsi que la tenue à la fois thermique et mécanique de ses différents composants.

En particulier le système d'allumage doit assurer le rallumage en vol en cas d'extinction accidentelle de la chambre de combustion tout en supportant les contraintes thermiques auxquelles il est soumis ; il doit notamment y résister. Ces conditions impliquent des dispositions difficilement compatibles. En effet le système d'injection produit une nappe de carburant pulvérisé formant un certain angle avec l'axe de la chambre. Si ce dernier est très fermé, la bougie est dehors du cône formé par le carburant ; cela est favorable du point de vue de la tenue thermique mais les capacités d'allumage de la chambre sont réduites. Inversement un système d'injection dont la nappe de carburant forme un cône très ouvert provoque un échauffement important de la zone de la chambre environnant la bougie en raison de l'impact du carburant sur les parois et la bougie. La tenue thermique de ces éléments s'en trouve affectée. Le montage de la bougie tient généralement compte de ces conditions thermiques.

La présente invention concerne les systèmes d'allumage dont la bougie est montée sur le carter de la chambre de combustion, par exemple par l'intermédiaire d'une pièce formant adaptateur elle-même fixée sur le carter de la chambre. La bougie, en aval du système d'injection de carburant, s'étend depuis le carter en direction radiale vers l'intérieur de la chambre et son extrémité affleure la face intérieure de la paroi de la chambre au travers d'une ouverture ménagée dans cette dernière.

Un jeu latéral de fonctionnement est ménagé autour de la bougie de manière à autoriser les déplacements relatifs entre la chambre et le carter résultant des variations de température, pressions et efforts pendant les différentes phases de vol sans que la bougie, solidaire du carter, ne vienne buter ou s'appuyer contre les bords de l'ouverture pratiquée dans la paroi de la chambre. La paroi, au niveau de l'ouverture, est pourvue d'une pièce cylindrique, plus ou moins haute et formant une cheminée dans laquelle l'extrémité distale de la bougie est glissée. Une douille flottante, forme guide bougie. Le guide bougie entoure la bougie de manière à fermer la cheminée et assurer l'étanchéité entre la chambre et la zone extérieure à la chambre, entre la chambre et le carter. Un exemple de ce type de montage de bougie dans une chambre de combustion de moteur à turbine à gaz est représenté dans la demande de brevet au nom de la demanderesse FR 2 926 329.

Le document EP1770332 décrit également un système de fixation d'une bougie d'allumage sur une paroi de chambre de combustion de turbine à gaz.

Outre l'encaissement des déplacements relatifs entre la chambre et le carter, la cheminée comprend des orifices de ventilation pour le refroidissement de la bougie. L'air est introduit depuis l'extérieur de la chambre de combustion, en raison de la différence de pression, et maintient la température de l'extrémité de la bougie exposée aux gaz de combustion et à son rayonnement, à un niveau acceptable par le matériau qui la constitue. Dans la mesure où les orifices de ventilation sont pratiqués radialement dans la paroi de la cheminée, il se forme de fins jets d'air en direction de la surface de la bougie. Le refroidissement produit par les jets dépend de différents paramètres dont le diamètre des orifices et la distance de ces derniers à la surface d'impact des jets.

Cependant, le refroidissement qui est optimum lorsque la bougie est au centre de la cheminée, tous les jets parcourant la même distance, peut voir son efficacité diminuer lorsque la bougie n'est plus centrale en raison des variations de chargements entre la chambre et le carter. Les transferts thermiques entre les jets d'air et la paroi d'impact calibrés au nominal augmentent lorsque la distance des jets est d'une part plus courte et diminuent d'autre part lorsque la distance des jets est plus longue que la distance optimale prédéfinie.

L'invention a pour objet un moyen permettant de maintenir un refroidissement optimal quelle que soit la phase de vol de l'aéronef et les variations thermiques entre la chambre de combustion et le carter que cela implique.

Conformément à l'invention, on parvient à réaliser cet objectif avec une chambre de combustion de moteur à turbine à gaz selon l'objet de la revendication 1.

En reportant la chambre de refroidissement, balayée par les jets d'air de refroidissement, au niveau du guide bougie, on rend le refroidissement de la surface d'impact indépendant des variations de dilatation entre la chambre et son environnement. En effet le guide bougie suit les mouvements de la bougie dans la cheminée et les dimensions de la chambre de refroidissement sont invariables.

Selon un mode préféré de réalisation, la chambre de refroidissement est annulaire et coaxiale à ladite portion de paroi cylindrique du guide bougie. On assure ainsi le refroidissement de du pourtour de la bougie. Selon l'invention, la chambre de refroidissement est disposée entre ladite portion de paroi cylindrique du guide bougie et la chambre de combustion. Elle est notamment ménagée entre la portion de paroi cylindrique du guide bougie et la collerette d'étanchéité.

Afin d'assurer une alimentation suffisante en air de refroidissement, les orifices d'alimentation en air de refroidissement sont de préférence orientés radialement et perpendiculairement à l'axe de la portion de paroi cylindrique du guide bougie.

Cependant, afin de tenir compte d'une géométrie particulière du guide bougie et de la contrainte d'un environnement étroit limitant également le volume de l'obstacle dans le flux, les orifices d'alimentation en air de refroidissement sont orientés en étant inclinés par rapport à l'axe de la portion de paroi cylindrique.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
La figure 1 montre en coupe longitudinale une partie d'une chambre de combustion de moteur à turbine à gaz selon l'art antérieur.
La figure 2 montre le détail de la zone d'affleurement selon l'art antérieur d'une bougie d'allumage avec une cheminée et un guide bougie telle que montrée sur la figure 1.
La figure 3 montre un mode de réalisation de l'invention avec un guide bougie amélioré.

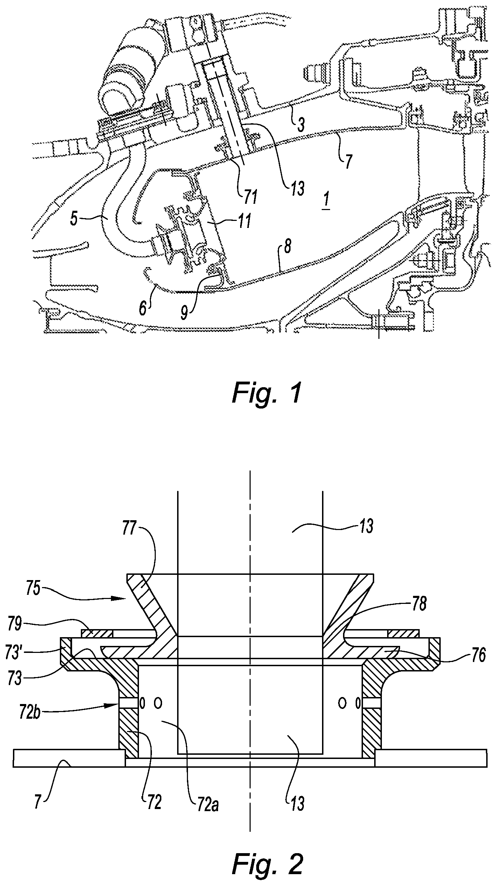

Comme on le voit sur la figure 1, la chambre de combustion 1 est contenue dans un espace annulaire autour de l'axe du moteur formé par un carter extérieur 3. Elle comprend une ou plusieurs viroles externes 7 et, une ou plusieurs viroles internes 8 maintenues ensemble par des brides ou des appuis appropriés, la chambre est fermée en amont par un fond de chambre 9 associé à des carénages 6 amont. Des cannes d'injection de carburant 5 sont réparties autour de l'axe du moteur et débouchent à l'intérieur de la chambre à travers des ouvertures ménagées dans le fond de chambre 9. Des déflecteurs 11 forment un bol autour de chaque canne d'injection de carburant, dévient une partie de l'air qui a pénétré dans la zone carénée en direction radiale et tourbillonnante vers le carburant pulvérisé, et assurent ainsi la formation d'un mélange de carburant avec de l'air. Une zone de combustion primaire est formée immédiatement en aval du fond de chambre dans laquelle le mélange est allumé par une bougie électrique 13 ou plusieurs bougies réparties circonférentiellement généralement 2.

La figure 2 montre en coupe le détail de la zone de la chambre de combustion comportant une ouverture pour le passage d'une bougie d'allumage. La virole externe 7, par exemple, est percée d'un orifice circulaire 71 autour duquel est monté un tube cylindrique 72 orienté radialement par rapport à la paroi externe 7. Ce tube forme une cheminée à travers laquelle passe la bougie 13. Cette cheminée comprend une surface d'appui supérieure 73 dans un plan perpendiculaire à l'axe de la cheminée, bordée d'un muret 73'. Sur cette surface 73 repose le guide bougie 75. Ce dernier comprend une collerette 76 et un cône d'introduction 77 autour d'une portion de cylindre de guidage 78. Le guide bougie 75 repose sur la surface d'appui 73 par l'intermédiaire de la collerette 76. Celle-ci peut coulisser sur cette surface entre les murets 73'. Une coupelle 79 soudée sur le muret 73' maintient la collerette 76 radialement contre tout déplacement radial au delà du muret 73'. La portion de surface cylindrique 78 présente un diamètre à peine supérieur à celui de la bougie. Cette dernière peut donc coulisser par rapport au guide bougie 75. La surface conique 77 a pour fonction de faciliter l'introduction de la bougie dans le guide bougie au moment du montage de la chambre. Le guide bougie ferme ainsi l'espace annulaire entre la bougie et la cheminée. Cet espace annulaire est alimenté par ailleurs en air par des orifices 72B orientés vers la surface de la bougie.

Un tel assemblage permet de suivre les déplacements relatifs résultant des variations thermiques et autres entre la chambre et le carter. Le guide bougie 75 peut se déplacer ainsi le long de la surface d'appui 73 à l'intérieur du muret 73'. On observe que l'espace annulaire entre la bougie 13 et la cheminée n'est pas constant. Lorsque la bougie s'est déplacée contre la cheminée, l'espace annulaire autour de la bougie varie entre une valeur nulle et une valeur qui est le double de l'espace annulaire au repos. Il s'ensuit que l'efficacité du refroidissement des jets d'air traversant les orifices 72B n'est pas homogène. Cela n'est pas souhaitable.

La solution de l'invention permet de maintenir un refroidissement efficace par impact tout autour de la bougie d'allumage.

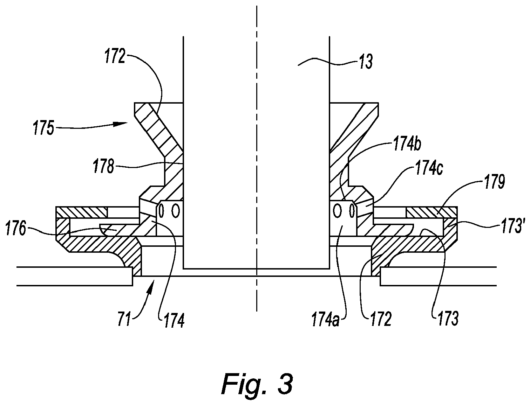

Un exemple de solution est montré sur la figure 3. L'assemblage de la figure 3 reprend les mêmes références que dans la figure 2, augmentées de 100 pour les parties semblables.

La bougie 13 est guidée dans la cheminée 172 par un guide bougie 175. On retrouve la surface d'appui 173 de la cheminée avec le muret 173' et la coupelle autorisant le déplacement du guide bougie dans un espace limité.

Le guide bougie 175 conforme à l'invention comprend la collerette 176 d'appui contre la surface d'appui de la cheminée. La portion de surface cylindrique de guidage 178 de diamètre intérieur adapté à celui de la bougie pour autoriser un glissement ajusté de la bougie dans cette portion de cylindre. On retrouve aussi la portion de surface tronconique 177 qui conserve la fonction de facilitation de l'introduction de la bougie dans le guide bougie et la cheminée.

Ce guide bougie 175 de l'invention comprend une portion de surface cylindrique de refroidissement 174 entre la portion de surface cylindrique de guidage 178 et la collerette 176. Cette portion de surface cylindrique de refroidissement 174 est de diamètre supérieur à celui de la portion de surface cylindrique de guidage 178. une chambre de refroidissement 174a est ainsi ménagée avec la surface de la bougie en vis-à-vis de la surface 174 et une portion de surface 174b radiale reliant les deux surfaces 174 et 178. La chambre est ouverte vers la chambre de combustion dont seule la paroi externe est référencée.

Des orifices 174c sont percés dans la portion de surface de refroidissement 174. Ces orifices sont orientés de telle manière que leur ouverture est dégagée et permet la circulation de l'air sans obstacle important. Dans le mode de réalisation représenté, les orifices sont inclinés par rapport à la surface d'impact de la bougie ; les jets d'air ont une composante de vitesse dirigée vers la chambre de combustion. Selon un autre mode de réalisation où la portion de surface cylindrique de refroidissement est de plus grande hauteur, les orifices seraient orientés perpendiculairement à la surface d'impact de la bougie.

En fonctionnement de la chambre de combustion, la bougie affleure la surface interne de la paroi de la chambre de combustion, c'est-à-dire que sa face distale est sensiblement dans le plan de la paroi de la chambre. Les diamètres des trous calibrent l'air injecté et la distance séparant la portion de paroi 174 de la surface de la bougie a été déterminée de manière à ce que le refroidissement par impact des jets d'air sur la bougie soir optimal. Dans les différentes phases de fonctionnement la bougie, solidaire du carter, est amenée à se déplacer par rapport à la paroi de la chambre de combustion. Cependant dans la mesure où le guide bougie 175 suit les déplacements de la bougie, les conditions de son refroidissement ne sont pas modifiées, l'efficacité reste inchangée.

## Revendications

1. Chambre de combustion de moteur à turbine à gaz comprenant une paroi, une cheminée (172) solidaire de la paroi, la cheminée formant un logement pour une bougie d'allumage (13) débouchant dans la chambre de combustion, un guide bougie (175) monté sur la cheminée de manière à être mobile transversalement par rapport à l'axe de la cheminée, le guide bougie (175) comprenant une portion de paroi cylindrique de guidage (178) de la bougie et une collerette d'étanchéité (176) montée en appui coulissant sur une surface d'appui (173) de la cheminée (172), le guide bougie (175) étant pourvu d'une chambre de refroidissement (174a) avec des orifices (174c) d'alimentation en air de refroidissement de ladite chambre (174a), ladite chambre de refroidissement (174a) étant agencée de manière à assurer un refroidissement par impact de la paroi de la bougie (13) logée dans le guide bougie, la chambre de refroidissement (174a) étant disposée entre ladite portion de paroi cylindrique de guidage (178) et la chambre de combustion, la dite chambre de combustion (174a) étant **caractérisée en ce que** la chambre de refroidissement comprend une portion de paroi cylindrique de refroidissement (174) ménagée entre la portion de paroi cylindrique de guidage (178) et la collerette d'étanchéité (176).

2. Chambre de combustion selon la revendication précédente dont la chambre de refroidissement (174a) est annulaire, ladite chambre de refroidissement et ladite portion de paroi cylindrique de guidage (178) étant coaxiales.

3. Chambre de combustion selon l'une des revendications précédentes dont les orifices d'alimentation en air de refroidissement (174c) de la chambre de refroidissement (174a) sont percés dans ladite portion de paroi de refroidissement et sont orientés perpendiculairement à l'axe de la portion de paroi cylindrique de refroidissement (174).

4. Chambre de combustion selon l'une des revendications 1 à 2 dont les orifices d'alimentation en air de refroidissement (174c) sont orientés en étant inclinés par rapport à l'axe de la portion de paroi cylindrique de refroidissement (174).

## Patentansprüche

1. Brennkammer eines Gasturbinenmotors, umfassend eine Wand, eine Leitung (172), die fest mit der Wand verbunden ist, wobei die Leitung ein Gehäuse für eine Zündkerze (13) bildet, das in die Brennkammer mündet, eine Kerzenführung (175), die so auf der Leitung befestigt ist, um quer zur Achse der Leitung bewegbar zu sein, wobei die Kerzenführung (175) einen zylindrischen Wandabschnitt zum Führen (178) der Kerze und einen Dichtungsflansch (176) umfasst, der verschiebbar aufliegend auf einer Auflageoberfläche (173) der Leitung (172) befestigt ist, wobei die Kerzenführung (175) mit einer Kühlkammer (174a) mit Öffnungen (174c) für die Zufuhr von Kühlluft an die Kammer (174a) vorgesehen ist, wobei die Kühlkammer (174a) so angeordnet ist, um für eine Kühlung durch Aufprall an der Wand der Kerze (13), die in der Kerzenführung aufgenommen ist, zu sorgen, wobei die Kühlkammer (174a) zwischen dem zylindrischen Wandabschnitt zum Führen (178) und der Brennkammer bereitgestellt ist, wobei die Brennkammer (174a) **dadurch gekennzeichnet ist, dass** die Kühlkammer einen zylindrischen Wandabschnitt zum Kühlen (174) umfasst, der zwischen dem zylindrischen Wandabschnitt zum Führen (178) und dem Dichtungsflansch (176) eingerichtet ist.

2. Brennkammer nach dem vorstehenden Anspruch, deren Kühlkammer (174a) ringförmig ist, wobei die Kühlkammer und der zylindrische Wandabschnitt zum Führen (178) koaxial sind.

3. Brennkammer nach einem der vorstehenden Ansprüche, deren Öffnungen für die Zufuhr von Kühlluft (174c) von der Kühlkammer (174a) im Wandabschnitt zum Kühlen durchgestochen sind und die senkrecht zur Achse des zylindrischen Wandabschnitts zum Kühlen (174) ausgerichtet sind.

4. Brennkammer nach einem der Ansprüche 1 bis 2, deren Öffnungen für die Zufuhr von Kühlluft (174c) ausgerichtet sind, indem sie in Bezug auf die Achse des zylindrischen Wandabschnitts zum Kühlen (174) geneigt sind.

## Claims

1. Combustion chamber of a gas turbine engine comprising a wall, a well (172) secured to the wall, the well forming a recess for a spark plug (13) leading into the combustion chamber, a spark-plug guide (175) mounted on the well such as to be transversely movable relative to the axis of the well, the spark-plug guide (175) including a cylindrical wall portion (178) of the spark plug and a seal ring (176) mounted such as to slidably engage with a bearing surface (173) of the well (172), the spark-plug guide (175) being provided with a cooling chamber (174a) with openings (174c) for supplying cooling air to said chamber (174a), the said cooling chamber (174a) being arranged in such a way as to provide a cooling by impacting the wall of the spark plug (13) housed in the spark-plug guide, the cooling chamber (174a) being arranged between said cylindrical wall portion (178) for guiding and the combustion chamber, the said combustion chamber (174a) being **characterised in that** the cooling chamber comprises a cylindrical wall portion for cooling (174) arranged between the cylindrical wall portion (178) for guiding and the seal ring (176).

2. Combustion chamber according to the preceding claim, in which the cooling chamber (174a) is annular, said cooling chamber and said cylindrical wall portion (178) for guiding being coaxial.

3. Combustion chamber according to one of the preceding claims, in which the openings for supplying cooling air (174c) of the cooling chamber (174a) are pierced in said wall portion for cooling and are oriented perpendicularly to the axis of the cylindrical wall portion (174) for cooling.

4. Combustion chamber according to one of claims 1 or 2, in which the openings for supplying cooling air (174c) are oriented by being inclined in relation to the axis of the cylindrical wall portion (174) for cooling.
